# EUROPÄISCHE PATENTSCHRIFT

(11) **EP 0 673 688 B1**
(45) Veröffentlichungstag und Bekanntmachung des Hinweises auf die Patenterteilung: **16.07.1997**
(21) Anmeldenummer: 95101887.8
(22) Anmeldetag: 11.02.1995
(51) Int. Cl.: B09C 1/02, B09C 1/08, A62D 3/00, C06B 21/00

(54) **Verfahren zur Dekontamination von Böden**
Method of decontaminating soil
Procédé pour la décomtanination du sol

(30) Priorität: 03.03.1994 DE 4406899
(43) Veröffentlichungstag der Anmeldung: 27.09.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: Bunte, Gudrun Dr., D-76229 Karlsruhe (DE); Eisenreich, Norbert Dr., D-76327 Söllingen (DE); Hirth, Thomas Dr., D-77815 Bühl (DE); Krause, Horst Dr., D-76327 Pfinztal (DE)

(56) Entgegenhaltungen:
- DE-A- 4 208 280
- DE-C- 4 115 435
- US-A- 4 909 868
- US-A- 5 133 877
- CHEMICAL ABSTRACTS, vol. 117, no. 7, 17.August 1992 Columbus, Ohio, US; abstract no. 69034r, W. GRIEST 'Supercritical fluid extraction of chemical warfare agent simulants from soil' Seite 722;
- CHEMICAL ABSTRACTS, vol. 119, no. 21, 22.November 1993 Columbus, Ohio, US; abstract no. 219244s, M. KUITUNEN 'Analysis of chemical warfare agents in soil samples by off-line supercritical fluid extraction and capillary gas chromatograhy' Seite 305;
- ENVIRONMENTAL SCIENCE AND TECHNOLOGY, Bd. 27, Nr. 5, 1993 EASTON, PA US, Seiten 806-808, K. VINOD 'Supercritical fluids tackle hazardous wastes'
- CHEMICAL AND ENGINEERING NEWS, 23.Dezember 1991 COLUMBUS US, Seiten 26-39, R. SHAW 'Supercritical water , a medium for chemistry'

## Beschreibung

Die Erfindung betrifft ein Verfahren zur Dekontamination von Böden, die mit militärischen Schadstoffen, z.B. energiereichen Stoffen, wie Explosivstoffe, Treibladungspulver, Raketenfesttreibstoffe, flüssige Treibmittel oder pyrotechnische Sätze und chemischen Kampfstoffen, kontaminiert sind.

Die Dekontamination von Böden, die mit energiereichen, insbesondere organischen Stoffen, wie Explosivstoffen, Treibladungspulver, Raketentreibstoffen, pyrotechnischen Sätzen oder dergleichen, kontaminiert sind, bereitet allein schon aufgrund des sicherheitstechnischen Risikos besondere Schwierigkeiten. Diese werden dann noch größer, wenn -wie dies häufig der Fall ist- auch Kontaminationen mit chemischen Kampfstoffen vorliegen, da das vorgenannte sicherheitstechnische Risiko aufgrund der leichten Initiierbarkeit noch durch die starke Toxizität solcher Kampfstoffe vergrößert wird.

Zur Sanierung von Böden mit umweltschädlichen Lösungsmittel-Kontaminationen, insbesondere polycyclischen und Halogenkohlenwasserstoffen, ist bereits die Extraktion mit überkritischem CO₂ vorgeschlagen worden (The Journal of Supercritical Fluids 1989, Vol.2, 85-96; Anal.Chem. 1989, Vol. 61, 736-740, Chem.-Ing.Tech. 65 (1993), Seite 434-436 und 440-442). Ferner ist es bei der Entsorgung von energiereichen Stoffen und chemischen Kampfstoffen bekannt, diese Stoffe in überkritischem H₂O zu lösen und durch direkte Hydrolyse und Pyrolyse zu zersetzen (Zeitschrift C & EN 23.12.91, Seite 26.39, US 5 133 877). Für die Aufbereitung von Böden, die mit eniergiereichen Stoffen kontaminiert sind, ist ferner die unmittelbare Hydrolyse vorgeschlagen worden (DE 41 15 435 C1), die aber aufgrund der großen Massen, die hierbei zu transportieren und zu behandeln sind, äußerst unwirtschaftlich ist. Ferner ist es bekannt, chemische Kampfstoffe mit überkritischen organischen Lösungsmitteln (Chem. Abstracts 117, 1992, S. 722) oder mit überkritischem CO₂ (Chem. Abstracts 119, 1993, S. 305) aus kontaminierten Böden zu extrahieren, ohne daß nähere Angaben darüber gemacht sind, wie der Extrakt bzw. die Kontaminationen weiterverarbeitet werden.

Der Erfindung liegt die Aufgabe zugrunde, mit militärischen Schadstoffen der vorgenannten Art kontaminierte Böden wirkungsvoll und wirtschaftlich zu dekontaminieren.

Diese Aufgabe wird erfindungsgemäß dadurch gelöst, daß die Schadstoffe mit überkritischem CO₂ als Lösungsmittel aus dem Boden extrahiert und der Extrakt (Lösung der Schadstoffe in CO₂) anschließend unmittelbar in eine chemische Zersetzungsstufe eingespeist wird, in der die Schadstoffe durch überkritische Hydrolyse oder Oxidation zersetzt werden.

Die Erfindung nutzt zunächst die Erkenntnis, daß die Mehrzahl von Explosivstoffen, Treibladungspulvern etc., wie auch chemische Kampfstoffe eine hervorragende Löslichkeit in überkritischem CO₂ zeigen. Hinzukommt, daß CO₂ bei einer Temperatur oberhalb von 31,3°C und einem Druck von 73,8 bar als überkritisches Fluid vorliegt, d.h. die Lösungseigenschaften bei einer relativ niedrigen Temperatur gegeben sind, so daß das Sicherheitsrisiko bei energiereichen Stoffen ohne weiteres beherrschbar ist. Im übrigen führt CO₂ als Lösungsmittel zu keiner (andersartigen) Kontamination des Bodens. Ferner ist die überkritische Extraktion mit CO₂ bereits im technischen Maßstab in der Nahrungsmittelindustrie, z.B. beim Entkoffeinieren von Kaffee erprobt. Schließlich kann die Extraktion unmittelbar vor Ort vorgenommen werden, so daß Transport- und Lagerungsprobleme entfallen. Der erhaltene Extrakt wird anschließend unmittelbar in eine chemische Zersetzungsstufe eingespeist. Hierbei bildet also das überkritische CO₂ zugleich das Trägermedium für den Transport der sensiblen bzw. hochgiftigen Schadstoffe und schützt Anlagenteile +nd Bedienungspersonal vor unmittelbarem Kontakt mit den reinen Schadstoffen. In der chemischen Zersetzungsstufe, in der die Zerlegung der Schadstoffe durch überkritische Hydrolyse oder Oxidation erfolgt, hat das CO₂ wegen seiner inerten Eigenschaften keinen Einfluß auf den Verfahrensablauf bzw. die Stoffumwandlung. Der Extrakt mit den Schadstoffen kann ausgehend von der Extraktion der Böden in einem geschlossenen System verarbeitet werden, so daß Sicherheits- und Arbeitsplatzrisiken, wie auch negative Umwelteinflüsse völlig ausgeschaltet werden.

Je nach Art der Zusammensetzung der durch Analyse festgestellten militärischen Schadstoffe kann es sich empfehlen, überkritisches CO₂ in Mischung mit als Modifikatoren wirkenden organischen Lösungsmitteln zu verwenden.

Dabei können die Schadstoffe in der zweiten Stufe vollständig zersetzt oder aber auch nur soweit zersetzt werden, daß sie umweltverträglich oder biologisch abbaubar sind, was bei cyclischen Kohlenwasserstoffen jedenfalls die Zerstörung des Aromatengerüstes voraussetzt. Bei einer sehr weitgehenden Zersetzung werden als Reaktionsprodukte vornehmlich H₂O, CO₂, N₂, N₂O, Ammonium, Nitrit, Nitrat, Sulfat, Phosphat und Halogenide anfallen.

Weiterhin ist es möglich, die Schadstoffe unmittelbar nach der Extraktion vor Ort in geschlossenen Reaktoren chemisch zu zersetzen.

Je nach Art der Verfahrensausführung ist es insbesondere auch möglich, das CO₂ im Kreislauf in die Extraktionsstufe zurückzuführen.

## Patentansprüche

1. Verfahren zur Dekontamination von Böden, die mit militärischen Schadstoffen, z.B. energiereichen Stoffen, wie Explosivstoffen, Treibladungspulver, Raketenfesttreibstoffen, flüssigen Treibmitteln oder pyrotechnischen Sätzen und chemischen Kampfstoffen, kontaminiert sind, wobei die Schadstoffe mit überkritischem CO₂ als Lösungsmittel aus dem Boden extrahiert und der erhaltene Extrakt anschließend unmittelbar in eine chemische Zersetzungsstufe eingespeist wird, in der die Schadstoffe durch überkritische Hydrolyse oder Oxidation zersetzt werden.

2. Verfahren nach Anspruch 1, dadurch gekennzeichnet, daß überkritisches CO₂ in Mischung mit organischen Lösungsmitteln verwendet wird.

3. Verfahren nach Anspruch 1 oder 2, dadurch gekennzeichnet, daß die Schadstoffe zu umweltverträglichen Reaktionsprodukten hydrolysiert oder oxidiert werden.

4. Verfahren nach einem der Ansprüche 1 bis 3, dadurch gekennzeichnet, daß die Schadstoffe soweit zersetzt werden, daß sie biologisch abbaubar sind.

5. Verfahren nach einem der Ansprüche 1 bis 3, dadurch gekennzeichnet, daß die Schadstoffe unmittelbar nach der Extraktion vor Ort in die chemische Zersetzungsstufe eingespeist werden.

## Claims

1. A method of decontaminating soil which is contaminated with military pollutants, e.g. energy-rich substances such as explosives, propellant powder, solid rocket fuels, liquid propellants or pyrotechnic sediments and chemical weapons, wherein the pollutant is extracted from the soil by super-critical CO₂ as solvent and the resulting extract is then passed directly into a chemical decomposition stage in which the pollutant is decomposed by super-critical hydrolysis or oxidation.

2. A method according to claim 1, characterized in that super-critical CO₂ is used in admixture with organic solvents.

3. A method according to claim 1 or 2, characterized in that the pollutants are hydrolysed or oxidised to reaction products which do not pollute the environment.

4. A method according to any of claims 1 to 3, characterized in that the pollutants are decomposed to the point that they are biologically degradable.

5. A method according to any of claims 1 to 3, characterized in that the pollutants are passed directly after the extraction on the spot into the chemical decomposition stage.

## Revendications

1. Procédé de décontamination du sol contaminé pour des matières militaires nocives, par exemple des matières à haute énergie, comme des matières explosives, des poudres à charge explosive, des carburants solides de fusée, des propulseurs liquides ou des articles pyrotechniques et des agents chimiques de combat, les matières nocives étant extraites du sol avec du CO₂ surcritique comme solvant et l'extrait obtenu étant alimenté ensuite dans une étape de décomposition chimique, dans laquelle les matières nocives sont décomposées par hydrolyse surcritique ou oxydation.

2. Procédé selon la revendication 1,
caractérisé en ce que
le CO₂ surcritique est utilisé en mélange avec des solvants organiques.

3. Procédé selon les revendications 1 ou 2,
caractérisé en ce que
les matières nocives sont hydrolysées ou oxydées en produits réactionnels supportables pour l'environnement.

4. Procédé selon une des revendications 1 à 3,
caractérisé en ce que
les matières nocives sont décomposées jusqu'à ce qu'elles soient biologiquement dégradables.

5. Procédé selon une des revendications 1 à 3,
caractérisé en ce que
les matières nocives dans l'étape de décomposition chimique sont stockées directement après l'extraction en avant du lieu.
